# EUROPEAN PATENT APPLICATION

(11) **EP 1 648 147 A1**
(43) Date of publication of application: **19.04.2006**
(21) Application number: 04748028.0
(22) Date of filing: 22.07.2004
(51) Int. Cl.: H04M 1/57, H04M 1/2745, H04Q 7/38

(54) **COLLAPSIBLE MOBILE TELEPHONE DEVICE**

(30) Priority: 23.07.2003 JP 2003278083
(71) Applicant: MATSUSHITA ELECTRIC INDUSTRIAL CO., LTD., Kadoma-shi, Osaka 571-8501 (JP)
(72) Inventor: TSUCHIYA, Toshiki, Kanagawa 226-0003 (JP); SAEKI, Toshihiro, Tokyo 166-0004 (JP)
(74) Representative: Pautex Schneider, Nicole Véronique
(86) International application number: PCT/JP2004/010763
(87) International publication number: WO 2005/009012

(57) **Abstract**

The present invention provides a fold type portable telephone device comprising a memory part for memorizing an incoming call history, an incoming call history read-out part, a display part, an open/close detector of a casing, and an automatic calling part for automatically dialing when the open/close detector detects that the casing is open. When the open/close detector detects that the casing is open at a state that the incoming call history is read out from the memory part and displayed on the display part, the foldable portable telephone device is set to automatically call a calling party displayed on the display part. Furthermore, a corresponding party for automatic dialing when the casing is open can be limited to members recorded as the telephone directory data in advance or limited to only some of members in the telephone directory data.

## Description

### FIELD OF THE INVENTION

The present invention relates to a fold type portable telephone device having an automatic calling function.

### BACKGROUND OF THE INVENTION

A fold type portable telephone device that has already been partially put into practice is provided with the following call control methods. The fold type portable telephone device has an open/close detector for detecting the open and closed state of a casing. When there is an incoming call at a state that the casing is closed, and the open/close detector detects that the casing is open, a phone conversation gets started. Furthermore, during the conversation, when the open/close detector detects that the casing is closed, the fold type portable telephone device terminates the conversation (for example, JP-A-1989-80145).

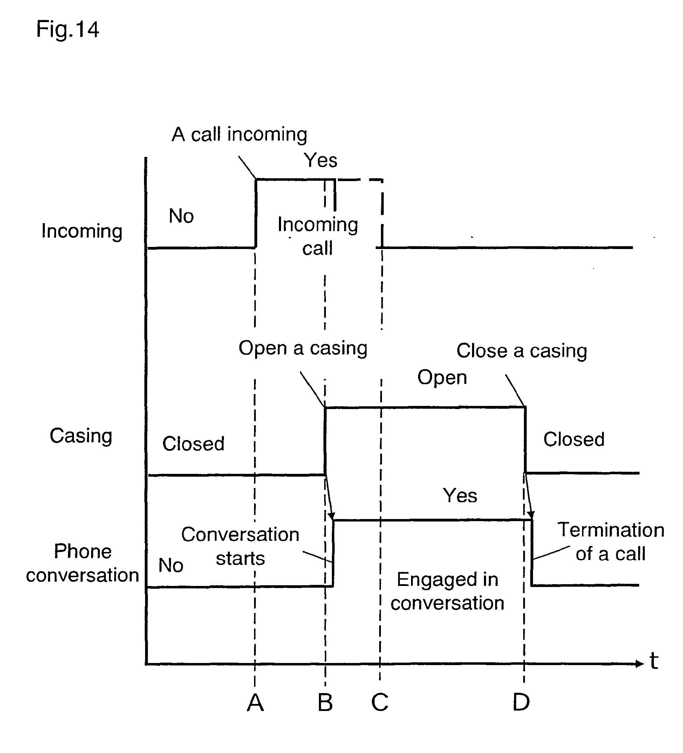

Fig. 14 is a timing chart for receiving an incoming call and terminating a phone conversation in the aforementioned conventional fold type portable telephone device.

Fig. 14 illustrates a yes and no state of an incoming signal, an open and closed state of a casing, and a yes and no state of a phone conversation from the top of the chart.

In Fig. 14, when the casing is closed, a caller is calling from a timing A to a timing C, for example, for just 10 seconds.

The conventional fold type portable telephone device receives an incoming call at a timing A. While such an incoming state continues, the user of the fold type portable telephone device opens the casing at a timing B. Then, the open/close detector detects the state of the casing, while the fold type portable telephone device switches its state from an incoming state to a conversation state.

Then, when the user closes the casing at a timing D during the conversation, the open/close detector detects the state of the casing and carries out termination of the conversation. Then, the conversation is terminated.

In this manner, the open/close detector is used instead of a hook switch for a telephone system that has been usually used, whereas in the conventional fold type portable telephone device, it was possible to communicate by phones when the user opens the casing and presses a button for initiating a phone conversation or another button for terminating the conversation one by one.

However, when an incoming state continued and the user did not open the casing, the user was unable to communicate with a caller. So, when timing for opening the casing was late, the incoming call was already disconnected in some cases.

When timing for the user to open the casing was late, the user reads out an incoming call history at a state that the casing is open to confirm the calling party and press a button for initiating a phone conversation. Such a series of operations for calling back were needed.

A first object of the present invention is to provide an excellent fold type portable telephone device which is convenient to use such that the fold type portable telephone device can automatically dial the phone number in the incoming call history displayed on the display part just by opening the casing, even when there is an incoming call at a state that a casing is closed and the incoming call is interrupted before the user opens the casing.

Furthermore, a second object of the present invention is to provide a portable telephone device which can automatically dial a phone number to be displayed on the display part when the user reads out the telephone directory data at a state that the casing is closed, just by opening the casing.

Furthermore, a third object of the present invention is to provide a fold type portable telephone device which does not automatically dial in response to an incoming call from a strange caller, such that the fold type portable telephone device does not automatically dial by opening a casing in case a phone number of a calling party is not recorded as the telephone directory data in the telephone directory memory part of the fold type portable telephone device, even though an incoming call history of the corresponding party is displayed at a state that a casing is closed.

Furthermore, a fourth object of the present invention is to provide a fold type portable telephone device which does not automatically dial even when the user opens a casing, in case an incoming call history or the telephone directory data of a calling party is not a telephone number for automatic dialing recorded in the telephone directory memory part as a favorable caller for automatic dialing by opening the casing, even though an incoming call history or the telephone directory data of the calling party is displayed at a state that the casing is closed.

### DISCLOSURE OF THE INVENTION

The fold type portable telephone device according to the present invention comprises a memory part for memorizing an incoming call history, an incoming call history read-out part, a display part, an open/close detector for detecting whether a casing is open or closed, and an automatic calling part for automatically dialing when the open/close detector detects that the casing is open, and automatically dials the phone number in the incoming call history displayed on the display part when the open/close detector detects that the casing is open at a state that the incoming call history is read out from the memory part and displayed on the display part.

Furthermore, the fold type portable telephone device according to the present invention comprises a telephone directory memory part for memorizing the telephone directory data, a telephone directory data read-out part, a display part, an open/close detector of a casing, and an automatic calling part for automatically dialing when the open/close detector detects that the casing is open, and automatically dials the phone number in the telephone directory data displayed on the display part, when the open/close detector detects that the casing is open at a state that the telephone directory data is read out from the telephone directory memory part and displayed on the display part.

Furthermore, the fold type portable telephone device according to the present invention is provided with a memory part for memorizing an incoming call history, a telephone directory memory part for memorizing the telephone directory data, and a phone number comparison part for comparing a phone number in an incoming call history that is read out from the memory part with the telephone directory data that is memorized in the telephone directory memory part, and automatically dials the phone number in the incoming call history displayed on the display part, when the open/close detector detects that the casing is open at a state that a phone number in the incoming call history that is read out from the memory part is confirmed identical to the telephone directory data memorized in the telephone directory memory part.

Then, the fold type portable telephone device according to the present invention comprises a telephone directory memory part in which a phone number to be automatically dialed when the user opens the casing is recorded as a phone number for automatic dialing, and a phone number comparison part for automatic dialing for comparing a phone number that is read out from the memory part or the telephone directory memory part and displayed on the display part with a phone number for automatic dialing, and automatically dials the phone number displayed on the display part when the open/close detector detects that the casing is open at a state that a phone number displayed on the display part is confirmed as a phone number for automatic dialing.

The fold type portable telephone device according to the present invention is configured to automatically dial a phone number in an incoming call history displayed on the display part when the open/close detector detects that the casing is open at a state that the incoming call history is read out from the memory part and displayed on the display part.

Accordingly, there is an advantage that it is possible to automatically dial by opening the casing after the user views the incoming call history and confirms a calling party at a state that the casing is closed, even though the user does not open the casing while there is an incoming call.

Furthermore, the fold type portable telephone device according to the present invention is configured to automatically dial a phone number in the telephone directory data displayed on the display part when the open/close detector detects that the casing is open at a state that the telephone directory data is read out from the telephone directory memory part and displayed on the display part.

Accordingly, there is an advantage that the fold type portable telephone device can automatically call a corresponding party displayed on the display part as the user reads out the telephone directory data to display it at a state that the casing is closed and opens the casing.

Furthermore, the fold type portable telephone device according to the present invention is configured to automatically dial a phone number in the incoming call history displayed on the display part when the open/close detector detects that the casing is open at a state that a phone number in the incoming call history that is read out from the memory part is confirmed identical to the telephone directory data that is memorized in the telephone directory memory part.

Consequently, the fold type portable telephone device can be configured not to automatically dial simply in response to an incoming call from a strange party by opening the casing. In particular, there is an advantage that the fold type portable telephone device does not automatically dial even though the casing is open when a phone number of a mischievous call without discrimination is displayed.

Further, the fold type portable telephone device according to the present invention is configured to automatically dial when the open/close detector detects that the casing is open at a state that a phone number that is read out from the memory part or the telephone directory memory part and displayed on the display part is confirmed as a phone number for automatic dialing.

Therefore, there is an advantage that it is possible to use the fold type portable phone in a way that only phone numbers recorded as phone numbers for automatic dialing can be automatically dialed by opening the casing, while phone numbers that are not recorded as such are not automatically dialed.

### BRIEF DESCRIPTION OF THE DRAWINGS

Fig. 1 is a view illustrating an appearance at a state that a casing of a fold type portable telephone device is closed according to a first embodiment of the present invention;
Fig. 2 is a view illustrating an appearance at a state that a casing of a fold type portable telephone device is open according to the first embodiment of the present invention;
Fig. 3 is a cross-sectional view of a fold type portable telephone device according to the first embodiment of the present invention;
Fig. 4 is a block diagram of a fold type portable telephone device according to the first embodiment of the present invention;
Fig. 5 is a flow chart illustrating an operation of a fold type portable telephone device according to the first embodiment of the present invention;
Fig. 6 is a view illustrating an appearance at a state that a casing of a fold type portable telephone device is closed according to the first embodiment of the present invention;
Fig. 7 is a block diagram of a fold type portable telephone device according to a second embodiment of the present invention;
Fig. 8 is a view illustrating an appearance at a state that a casing of a fold type portable telephone device is closed according to the second embodiment of the present invention;
Fig. 9 is a flow chart illustrating an operation of a fold type portable telephone device according to the second embodiment of the present invention;
Fig. 10 is a block diagram of a fold type portable telephone device according to a third embodiment of the present invention;
Fig. 11 is a view illustrating the contents memorized in a memory part of a fold type portable telephone device according to the third embodiment of the present invention;
Fig. 12 is a view illustrating an appearance at a state that a casing of a fold type portable telephone device is open according to a fourth embodiment of the present invention;
Fig. 13 is a view illustrating an appearance at a state that a casing of a fold type portable telephone device is closed according to the fourth embodiment of the present invention; and
Fig. 14 is a timing chart at the time of incoming a call for the conventional fold type portable telephone device.

### BEST MODE FOR CARRYING OUT THE INVENTION

Embodiments of the present invention are explained hereinafter with reference to the drawings.

### Embodiment 1

A fold type portable telephone device 100 according to a first embodiment of the present invention is more specifically illustrated below with reference to the drawings.

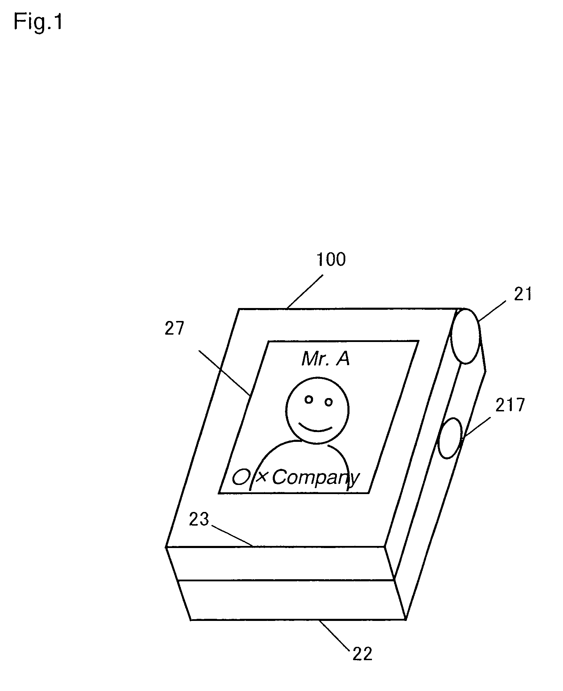

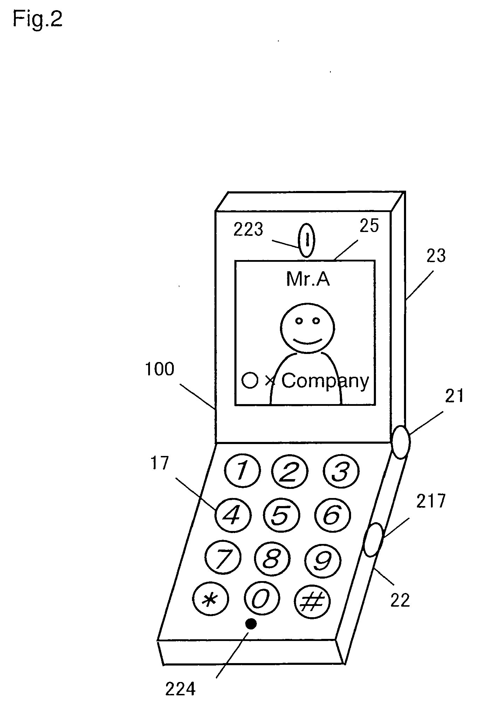

Fig. 1 is a view illustrating an appearance at a state that a casing of the fold type portable telephone device 100 is closed according to the first embodiment of the present invention. Fig. 2 is a view illustrating an appearance at a state that the casing is open.

In the fold type portable telephone device 100 as shown in Figs. 1 and 2, a second casing 23 on the top of a first casing 22 is supported by a hinge 21 so that it can be freely opened and closed. The first casing 22 comprises a first key operation part 17 such as a numeric keypad for the entry of phone numbers and the like, and a microphone 224 functioning as a transmitter.

Furthermore, the first casing 22 comprises a second key operation part 217 formed on one side thereof which enables the user to manipulate the telephone from the outside even when the second casing 23 is closed. The second casing 23 comprises a speaker 223 functioning as a receiver, a first display part 25 using a color liquid crystal display and the like in the inner part of the second casing 23, and a second display part 27 in the outer part thereof.

To carry the fold type portable telephone device 100, it is put in a pocket, a bag or the like as folded by closing the second casing 23 with respect to the first casing 22.

When the fold type portable telephone device 100 receives an incoming call at a state that it is folded, the speaker 223 that is built in the second casing 23 notifies that there is an incoming call by making an incoming sound. Furthermore, the second display part 27 of the second casing 23 shows a phone number of a corresponding party (a caller) who places a call.

Incidentally, when a calling party is recorded in the telephone directory memory part of the fold type portable telephone device 100, and data of a name or a facial image corresponding to the phone number is memorized, the fold type portable telephone device 100 shows the name or the facial image along with the phone number or instead of the phone number.

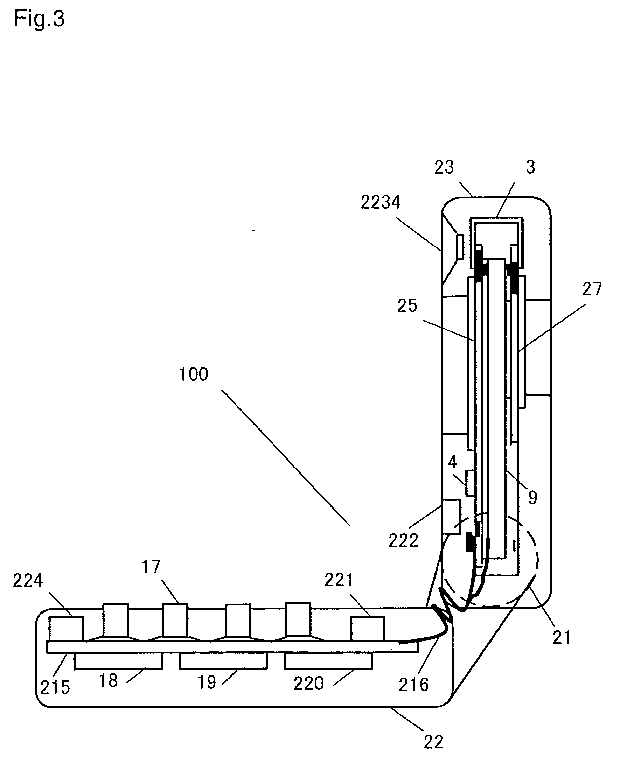

Fig. 3 is a schematic sectional view of the fold type portable telephone device 100 according to the first embodiment of the present invention.

In the fold type portable telephone device 100, a second casing 23 is supported by a hinge 21 in front of an arm extended from the first casing 22 so that it can be freely opened and closed. The first casing 22 comprises a main substrate 215 of the fold type portable telephone device 100.

There are mounted respective circuits such as a whole control part 18, a memory part 19 and a wireless part 220, a first key operation part 17, a microphone 224, an open/close detector 221 using a Hall element or the like, a telephone directory memory part 219 which is not illustrated therein and the like on the main substrate 215.

The second casing 23 comprises a first display part 25, a permanent magnet 222 for detecting an open and closed state, and a speaker 223 functioning as a receiver inside thereof, and a second display part 27 outside thereof. A backlight 9 for illuminating is provided between the first display part 25 and the second display part 27.

Incidentally, a flexible connection substrate 3 connects the first display part 25 and the second display part 27, while a common driver circuit 4 drives the first display part 25 and the second display part 27.

The first display part 25, the backlight 9, and the speaker 223, though not partly illustrated, are respectively connected to a flexible control substrate 216 in which its front end is branched, while the other end of the flexible control substrate 216 is connected to the main substrate 215 inside the first casing 22.

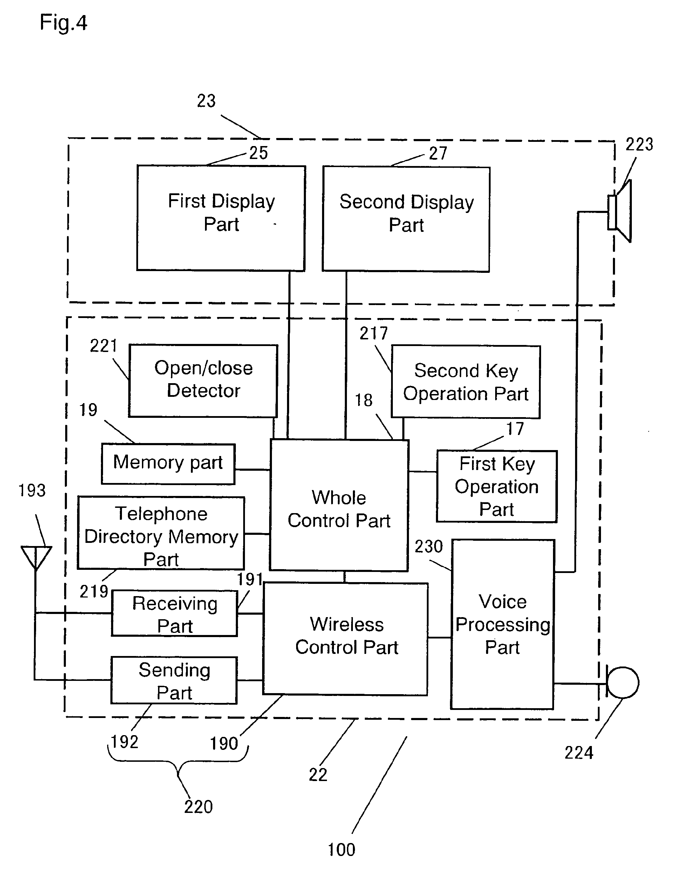

Fig. 4 is a schematic block diagram of the fold type portable telephone device 100 according to the first embodiment of the present invention.

In Fig. 4, two frames in a dashed line indicate the first casing 22 and the second casing 23 respectively. The whole control part 18 controls the entire operation of the fold type portable telephone device 100.

Furthermore, the whole control part 18 is connected to the first display part 25, the second display part 27, the open/close detector 221, the first key operation part 17, the second key operation part 217, and the wireless part 220. The wireless part 220 comprises a wireless control part 190 for controlling radio communications, a receiving part 191, a sending part 192, and an antenna 193.

Furthermore, the whole control part 18 is connected to the memory part 19 for memorizing an incoming call history of a phone number of an incoming caller, a telephone directory memory part 219 for memorizing the telephone directory data such as a phone number, a name, and a facial image corresponding to the phone number and the like, and a voice processing part 230.

The voice processing part 230 is connected to the wireless control part 190, the speaker 223 functioning as an incoming alarm or a receiver, the microphone 224 functioning as a transmitter.

In the fold type portable telephone device 100 according to the first embodiment of the present invention, when the user presses the first key operation part 17 and the power is supplied to the whole control part 18 and the wireless part 220 from a battery power supply which is not illustrated, the wireless part 220 intermittently sends/receives control signals to/from a base station of a portable telephone network that is not illustrated, and the fold type portable telephone device 100 enters into a standby mode for expecting an incoming call.

When the second casing 23 is closed and the fold type portable telephone device 100 receives a call, the whole control part 18 memorizes the incoming phone number on the memory part 19, and at the same time, the fold type portable telephone device 100 displays the phone number of the incoming caller on the second display part 27 of the second casing 23. Furthermore, when the telephone directory data corresponding to the phone number is present in the telephone directory memory part 219, the fold type portable telephone device 100 displays a name and a facial image of the incoming caller on the second display part 27 of the second casing 23.

If the user opens the second casing 23 while the fold type portable telephone device 100 receives a call, the open/close detector 221 detects its open state and the fold type portable telephone device 100 initiates a conversation.

When the user does not open the second casing 23 while there is an incoming call, the fold type portable telephone device 100 displays [a call incoming] on the second display part 27 of the second casing 23.

When the fold type portable telephone device 100 is not receiving any incoming call at a state that the second casing 23 is closed, and if the user presses the second key operation part 217 on the side thereof, the whole control part 18 reads out an incoming call history from the memory part 19 and displays it on the second display part 27.

When the fold type portable telephone device 100 has a plurality of incoming call histories, the fold type portable telephone device 100 displays such incoming call history data in sequence, every time the user presses the second key operation part 217.

When the fold type portable telephone device 100 displays an incoming call history that is read out from the memory part 19 on the second display part 27, if the open/close detector 221 detects that the second casing 23 is open, the whole control part 18 dials the phone number of the corresponding party being displayed using the wireless part 220.

Furthermore, the user presses the second key operation part 217 at a state that the casing is closed to read out the telephone directory data from the telephone directory memory part 219 and the fold type portable telephone device 100 according to the first embodiment of the present invention displays such data on the second display part 27 of the second casing 23.

When the fold type portable telephone device 100 has a plurality of the telephone directory data, the fold type portable telephone device 100 sends and displays data in the telephone directory in sequence, every time the user presses the second key operation part 217. Then, when a desired corresponding party is displayed on the fold type portable telephone device 100 and the user opens the second casing 23, the fold type portable telephone device 100 automatically dials the phone number of the corresponding party displayed thereon.

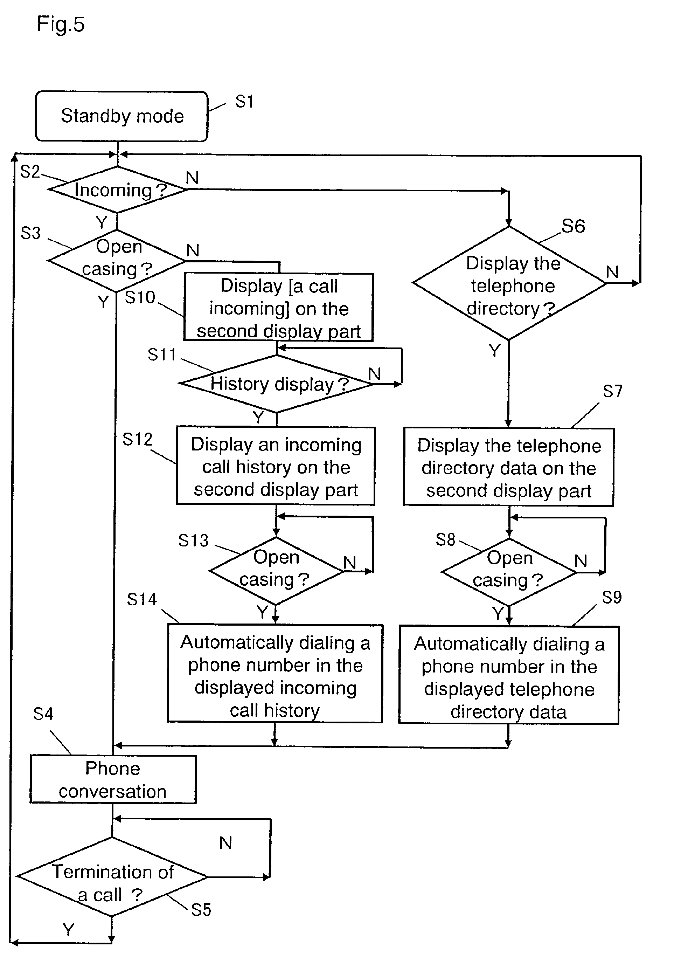

Fig. 5 is a flow chart illustrating an operation for receiving a call and an operation for dialing at a state that the fold type portable telephone device 100 closes the second casing 23.

When the user turns on the power of the fold type portable telephone device 100, the wireless part 220 is started up and the fold type portable telephone device 100 intermittently receives control signals from a base station that is not illustrated and enters into a standby mode for expecting an incoming call (Step S1).

When the second casing 23 is closed and the fold type portable telephone device 100 receives an incoming call, the speaker 223 makes an incoming sound and the fold type portable telephone device 100 shows an incoming display such as a phone number of an incoming caller and the like on the second display part 27 (Step S2).

When the user opens the second casing 23 (Step S3), the open/close detector 221 detects that the second casing 23 is open, and the whole control part 18 makes the wireless control part 190 to initiate a conversation (Step S4).

When the corresponding party terminates the call or the user closes the second casing 23 of the fold type portable telephone device 100, the conversation is terminated (Step S5) and the fold type portable telephone device 100 returns to the standby mode in Step S1.

When the fold type portable telephone device 100 does not receive an incoming call in Step S2 and the user selects a mode for the second display part 27 to display the telephone directory data using the second key operation part 217 (Step S6), the telephone directory data is read out from the telephone directory memory part 219, and the telephone directory data such as a phone number, a name, a facial image and the like is displayed on the second display part 27 (Step S7).

When the fold type portable telephone device 100 memorizes a plurality of the telephone directory data, the telephone directory data is displayed one by one in the manner that the telephone directory data is sequentially sent, every time the user presses the second key operation part 217. So, the user presses the second key operation part 217 until a corresponding party is displayed on the second display part 27.

When the user opens the second casing 23 at a state that the fold type portable telephone device 100 displays the corresponding party who is wanted to be connected (Step S8), the open/close detector 221 detects that the second casing 23 is open, and the whole control part 18 controls the wireless control part 190 for automatically dialing a phone number in the telephone directory data that is displayed (Step S9).

When the corresponding party answers a call, the fold type portable telephone device 100 initiates a conversation (Step S4). The fold type portable telephone device 100 returns to the standby mode in Step S1 when an operation for terminating the call is conducted (Step S5).

In Step S2 of a flow chart in Fig. 5, when the fold type portable telephone device 100 receives an incoming call, and the user does not answer the call without opening the second casing 23 (Step S3), the whole control part 18 displays [a call incoming] on the second display part 27 (Step S10).

If the user presses the second key operation part 217 when the fold type portable telephone device 100 displays [a call incoming], the whole control part 18 displays an incoming call history on the second display part 27 (Step S11).

The fold type portable telephone device 100 displays an incoming call history such as an incoming phone number, a name, a facial image and the like of a calling party, which is read out from the memory part 19, on the second display part 27 (Step S12).

When the fold type portable telephone device 100 displays the incoming call history, and the open/close detector 221 detects that the second casing 23 is open (Step S13), the fold type portable telephone device 100 dials the phone number in the incoming call history that is displayed (Step S14).

In this manner, even when the user does not respond to the incoming call at a state that the second casing 23 is closed, the user presses the second key operation part 217 as the second casing 23 remains closed to first confirm an incoming call history such as a phone number and the like of a calling party by displaying it on the second display part 27. Then, it is possible to call back with great ease by an operation of opening the second casing 23.

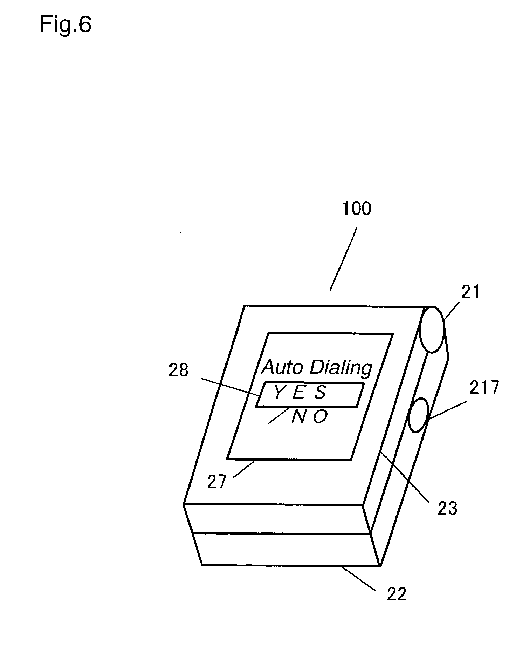

Incidentally, a phone number, a name and a facial image of a calling party are displayed for the confirmation of the caller. As a result, the user may not call back in some cases so that the fold type portable telephone device 100 displays a selection screen on the second display part 27 which enables the user to select whether to automatically call the calling party as shown in Fig. 6 by pressing the second key operation part 217 for a predetermined time, for example, for a second at a state that the fold type portable telephone device 100 displays the incoming call history or not.

Then, the user presses the second key operation part 217 once more, whereby a cursor frame 28 can be switched to either an indication for automatic dialing (YES) or an indication for canceling the automatic dialing (NO). By pressing as such for a while, the fold type portable telephone device 100 may be set to individually cancel automatic dialing at a state that the second casing 23 is closed.

### Embodiment 2

A fold type portable telephone device 200 according to a second embodiment of the present invention is explained below.

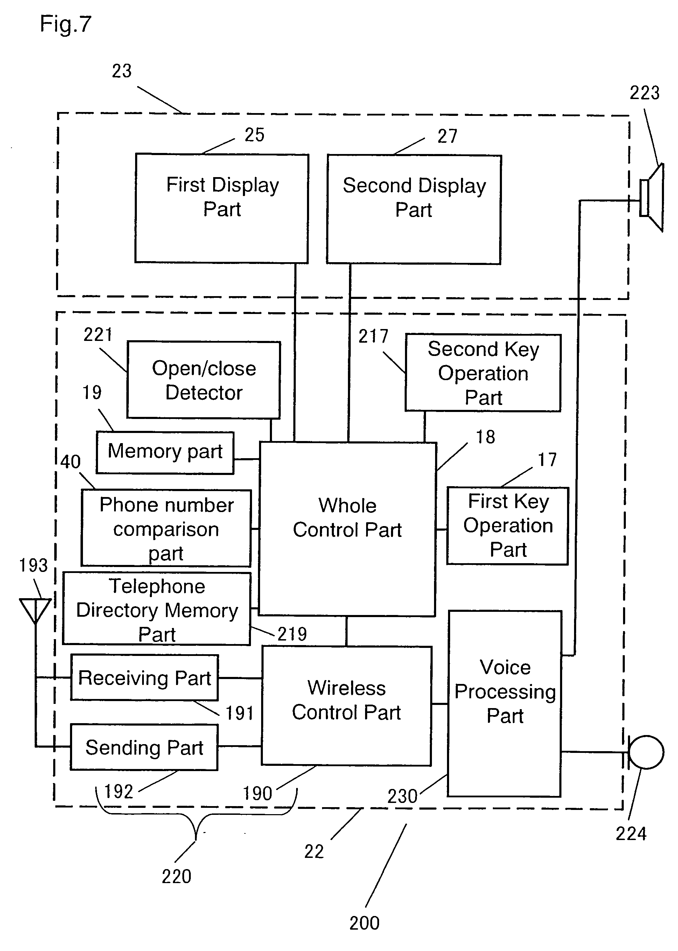

Fig. 7 is a block diagram of the fold type portable telephone device 200 according to the second embodiment of the present invention.

The fold type portable telephone device 200 further comprises a phone number comparison part 40 in addition to those in the first embodiment as shown in Fig. 4. The phone number comparison part 40 may be assembled into the whole control part 18, whereas it is independently illustrated as a functional block in order to clearly describe the functions and a structure thereof.

Incidentally, an appearance of the fold type portable telephone device 200 is the same as that of the fold type portable telephone device 100 in the first embodiment as described before so that further explanation will be omitted.

The phone number comparison part 40 contrasts and compares whether a phone number received by the fold type portable telephone device 200 and displayed on the display part is recorded as the telephone directory data of the telephone directory memory part 219, or contrasts and compares it with a phone number that is displayed on the display part as the user reads out the telephone directory data one by one, and then, notifies the comparison result to the whole control part 18.

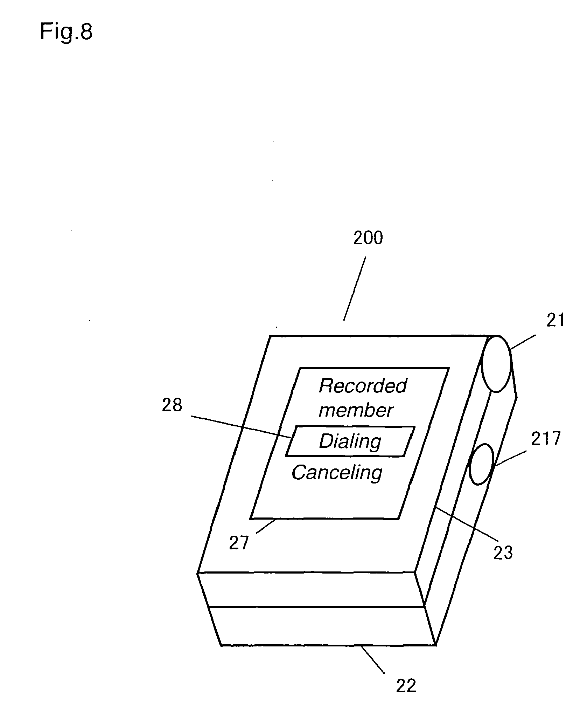

Then, when the whole control part 18 finds that the incoming phone number is the same as the telephone directory data, the fold type portable telephone device 200 indicates that the incoming phone number is from a recorded member and it can be automatically dialed, thereby showing a display as shown in Fig. 8 and a display of an incoming call history by turns. When the user opens the second casing 23 at a state that a display of Fig. 8 or a display of an incoming call history is displayed, the fold type portable telephone device 200 automatically dials the phone number in the incoming call history that is displayed.

Incidentally, when the incoming phone number is not identical to the telephone directory data of the telephone directory memory part 219, the fold type portable telephone device 200 is set not to automatically dial without showing a display as in Fig. 8, even if the user opens the second casing 23.

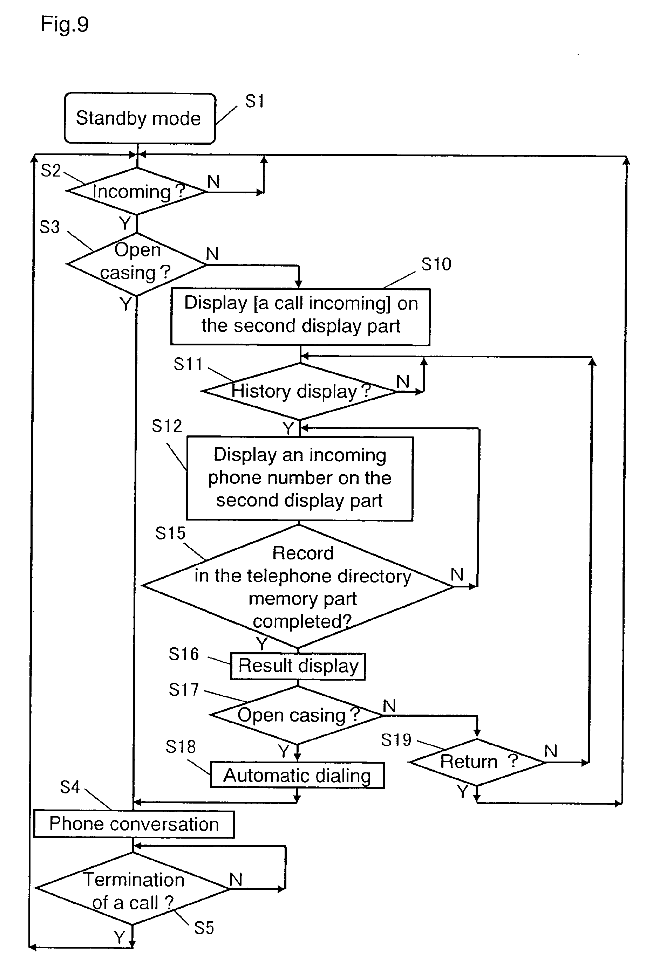

Fig. 9 is a flow chart illustrating an operation of the fold type portable telephone device 200 according to the second embodiment of the present invention.

Incidentally, the same steps as in the flow chart according to the first embodiment of the present invention shown in Fig. 5 will not be explained with the same step numbers given thereto.

In Fig. 9, at a standby mode for expecting an incoming call (Step S1), when the fold type portable telephone device 200 receives an incoming call (Step S2), and the user does not respond to an incoming call without opening the second casing 23 (Step S3), a phone number of an incoming caller is memorized in the memory part 19 and the fold type portable telephone device 200 displays [a call incoming] on the second display part 27 (Step S10).

When the user presses the second key operation part 217 at a state that the fold type portable telephone device 200 displays [a call incoming], the fold type portable telephone device 200 instructs to display an incoming call history (Step S11).

Then, the fold type portable telephone device 200 displays the incoming call history such as an incoming phone number, a name, a facial image and the like of the calling party on the second display part 27 (Step S12).

When the fold type portable telephone device 200 displays the phone number of the calling party, the whole control part 18 compares whether the phone number of the calling party that is displayed is recorded in the telephone directory data of the telephone directory memory part 219 of the fold type portable telephone device 200 using the phone number comparison part 40 (Step S15).

If the phone number of the calling party is recorded as the telephone directory data, as already shown in Fig. 8, the fold type portable telephone device 200 displays that the call is from a member recorded in the telephone directory data on the second display part 27, and at the same time, displays a message intending to automatically dial when the user opens the second casing 23 and an incoming call history by turns (Step S16).

At this time, when the user opens the second casing 23 (Step S17), the fold type portable telephone device 200 automatically dials the phone number in the incoming call history that is displayed (Step S18).

In Step S17, when the user cancels the automatic dialing using the second key operation part 217 at a state that the second casing 23 is closed (Step S19), the fold type portable telephone device 200 returns to the standby mode in Step S1.

When the fold type portable telephone device 200 according to the second embodiment of the present invention displays an incoming call history at a state that the second casing 23 is closed, the phone number comparison part 40 compares whether the displayed phone number is recorded in the telephone directory data or not, and shows the result.

Then, when the calling party is not recorded, the fold type portable telephone device 200 does not automatically dial even when the user opens the casing. So, there is an advantage that it does not carelessly call a corresponding party that is not recorded in the telephone directory data.

### Embodiment 3

A fold type portable telephone device 300 according to a third embodiment of the present invention is explained below.

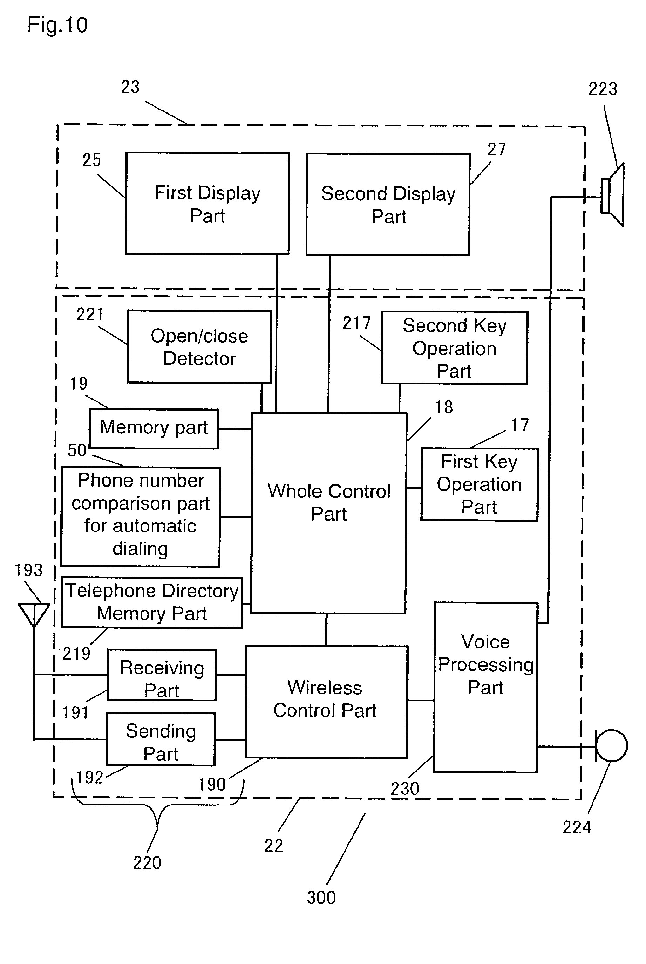

Fig. 10 is a block diagram illustrating the fold type portable telephone device 300 according to the third embodiment of the present invention.

An appearance of the fold type portable telephone device 300 is the same as that of the fold type portable telephone device 100 in the first embodiment as described before so that a view illustrating an appearance and further explanation thereof will be omitted.

The fold type portable telephone device 300 comprises a phone number comparison part for automatic dialing 50 instead of the phone number comparison part 40 in the fold type portable telephone device 200 according to the second embodiment.

Incidentally, the whole control part 18 may comprise the phone number comparison part for automatic dialing 50 assembled thereinto.

The phone number comparison part for automatic dialing 50 compares whether a phone number displayed on the display part is recorded as a phone number for automatic dialing contained in the telephone directory data of the telephone directory memory part 219, that is, a phone number which may be automatically dialed when the user opens the casing, and then notifies the comparison result to the whole control part 18.

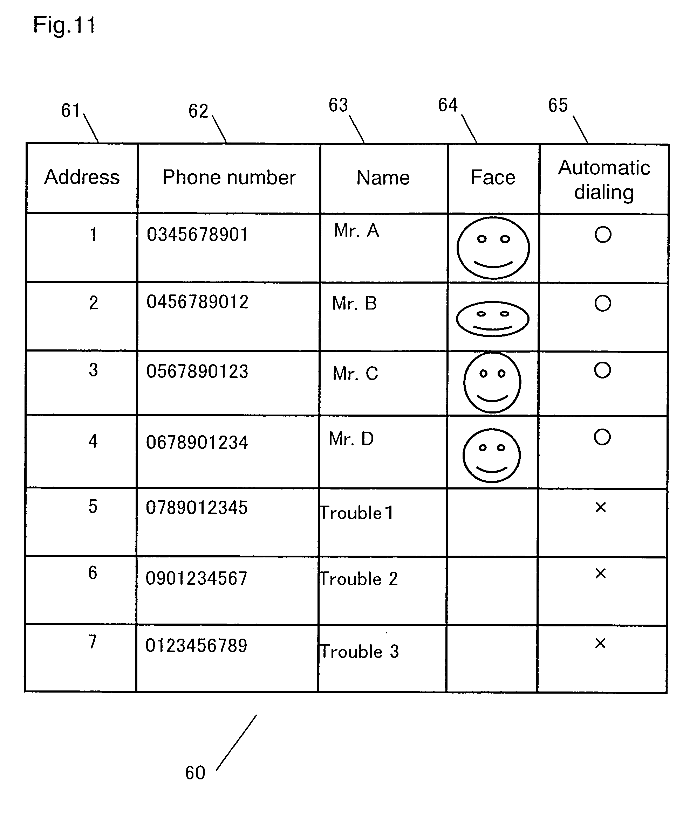

Fig. 11 is a schematic view of the contents memorized in the telephone directory memory part 219 of the fold type portable telephone device 300 according to the third embodiment of the present invention.

The telephone directory memory part 219 memorizes a phone number 62, a name 63, a facial image 64, and automatic dialing information 65 per each address 61 in a memory table 60 as one set data.

In Fig. 11, a phone number which may be automatically dialed when the user opens the second casing 23 in advance is marked as "○" as a phone number for automatic dialing. A phone number which is not automatically dialed when the user opens the casing 23, for example, a phone number recorded as a number in trouble and the like is marked as X for indicating no automatic dialing.

The fold type portable telephone devise 300 memorizes a phone number in trouble as the telephone directory data, in order that when there is an incoming call from a phone number previously recorded as a number in trouble, the fold type portable telephone device 300 automatically rejects such a call, which is a so-called incoming call rejecting function using the telephone directory.

In the fold type portable telephone device 300 according to the third embodiment of the present invention, the user opens the casing, whereby the fold type portable telephone device 300 automatically dials only a phone number for automatic dialing and does not automatically dial a phone number which is not a phone number for automatic dialing such as a number in trouble and the like.

When the fold type portable telephone device 300 receives an incoming call, the phone number comparison part for automatic dialing 50 compares whether an incoming phone number is recorded as the number of a corresponding party who may be automatically called by opening the case or not.

When an incoming phone number is from a corresponding party that is marked as "○" for automatic dialing, as already shown in Fig. 8, the fold type portable telephone device 300 displays that an incoming phone number is from a recorded member allowed for automatic dialing on the second display part 27. Then, when the user opens the casing 23, the fold type portable telephone device 300 automatically dials.

When an incoming phone number is from a corresponding party marked as X who is not allowed for automatic dialing, such as the aforementioned phone number in trouble, the fold type portable telephone device 300 does not dial even though the user opens the casing 23.

In this manner, the fold type portable telephone device 300 automatically dials only phone numbers for automatic dialing allowed for automatic dialing out of phone numbers memorized in the telephone directory data by opening the casing 23, while the fold type portable telephone 300 does not automatically dial phone numbers which are not phone numbers for automatic dialing even though the user opens the casing 23.

Incidentally, in the above explanation is described the fold type portable telephone device 300 which displays an incoming call history and automatically dials. However, when the fold type portable telephone device 300 displays the telephone directory data and automatically dials, the phone number comparison part for automatic dialing 50 checks whether the phone number displayed on the display part is a phone number for automatic dialing. Only when it is a phone number for automatic dialing, the fold type portable telephone device 300 can be set to automatically dial by opening the casing 23. When it is not a phone number for automatic dialing, the fold type portable telephone device 300 can be set not to automatically dial even if the user opens the casing 23.

### Embodiment 4

A fold type portable telephone device 400 according to a fourth embodiment of the present invention is explained below.

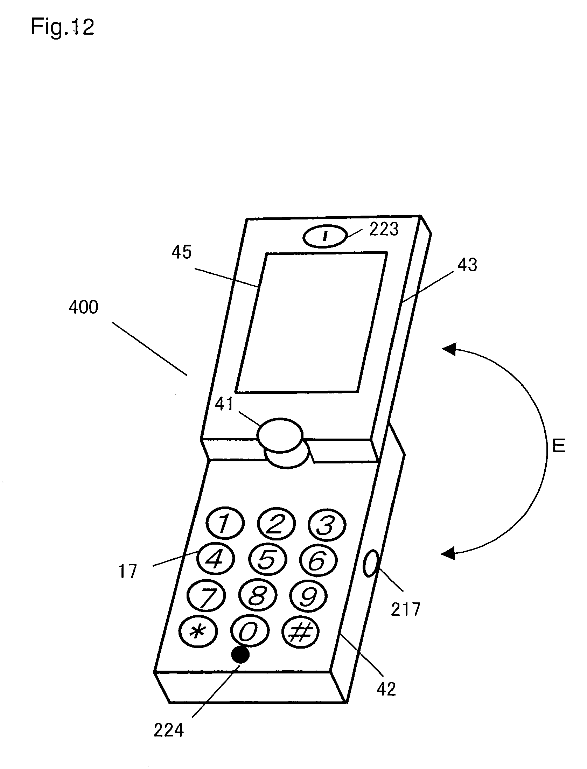

Fig. 12 is a view illustrating an appearance of the fold type portable telephone device 400 according to the fourth embodiment of the present invention.

The fold type portable telephone device 400 is provided with a first casing 42 having a rotation axis 41 and a second casing 43 rotating in a horizontal direction as shown by an arrow E centering on the rotation axis 41. The rotation axis 41 comprises an open/close detector which is not illustrated. The open/close detector detects whether the second casing 43 is open or closed.

Even when the second casing 43 is put upon the first casing 42, the user can view the display part 45 from the outside so that the second casing 43 does not have a second display part.

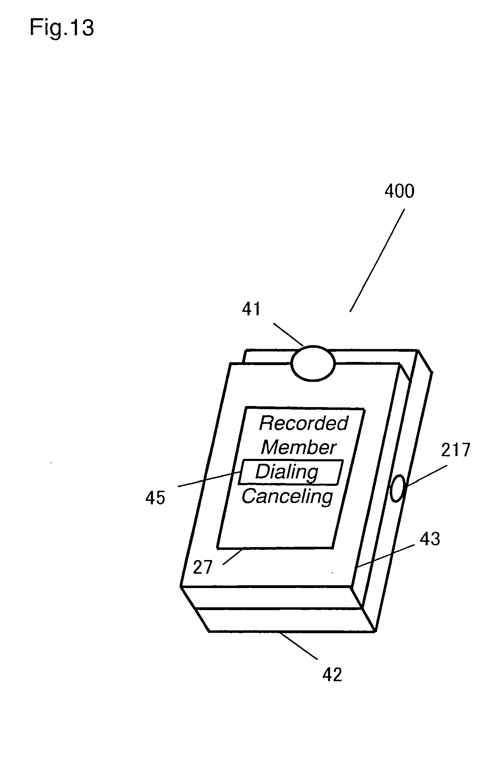

Fig. 13 is a view illustrating an appearance at a state that the second casing 43 is rotated and put upon the first casing 42.

Incidentally, the internal configuration of the fold type portable telephone device 400 is almost identical to the first embodiment to the third embodiment as already described above, except that the second casing 43 has only one display part 45, so that no further explanation is provided.

Furthermore, since respective constituents such as a key operation part 17, a speaker 223, a microphone 224 and the like are also identical to the first embodiment to the third embodiment as described before, the same reference numbers are given to the same parts without further explanation.

According to the fold type portable telephone device 400 in the fourth embodiment, when the fold type portable telephone device 400 receives an incoming call at a state that the second casing 43 is closed, the fold type portable telephone device 400 displays a phone number of an incoming caller on the display part 45, as shown in Fig. 13.

Furthermore, the fold type portable telephone device 400 compares whether the phone number of the incoming caller is a phone number recorded in advance on the telephone directory memory part. When the phone number is identical to the recorded phone number, the display part 25 displays that the phone number is a recorded one and the fold type portable telephone device 400 automatically dials when the user opens the second casing 43.

Incidentally, when the fold type portable telephone device 400 displays as shown in Fig. 13, the user moves a cursor frame from [Dialing] to [Canceling] using the second key operation part 217, whereby the fold type portable telephone device 400 may be set not to dial even when the user opens the second casing 43.

In this manner, the present invention can be applied to a fold type portable telephone device in which the second casing 43 is rotating in a horizontal direction on the first casing 42.

Furthermore, in the first embodiment to the fourth embodiment, the fold type portable telephone devices that realize an open and close operation by rotation are described. However, the present invention can also be applied to a so-called slide type portable telephone device for sliding the second casing positioned on the first casing as an embodiment of the fold type portable telephone device. An open/close detector of the slide type portable telephone device detects a state of the second casing whether it is put upon the first casing for detecting an open and closed state.

Incidentally, in the above explanation, there is exemplified a configuration of the open/close detector which is composed of a Hall element 221 for detecting an approach of the permanent magnet 222. However, in a fold type portable telephone device designed to automatically open and close the first casing 22 and the second casing 23 that is closed with respect to the first casing 22 by releasing a spring force of a coil spring which is built in the hinge 21, or a fold type portable telephone device designed to automatically open the closed second casing 23 by a driving motor for opening and closing, instead of the Hall element 221 for detecting an approach of the permanent magnet 22, a button for releasing a spring force of the coil spring or a switch for operating the driving motor for opening and closing can be used as an open/close detector.

### INDUSTRIAL APPLICABILITY

As described above, the present invention can be applied to a fold type portable telephone device which automatically dials by a simple operation at a state that a phone number in an incoming call history or the telephone directory is read out and displayed.

Furthermore, the invention can be applied to a fold type portable telephone device in which a phone number that is not recorded in the telephone directory or a phone number recorded in the telephone directory but excluded from that for automatic dialing can be restricted so as not to be automatically dialed.

### Reference numbers in the drawings

- 17: a second key operation part
- 18: a whole control part
- 21: a hinge
- 22: a first casing
- 23: a second casing
- 19: a memory part
- 25: a first display part
- 27: a second display part
- 40: a phone number comparison part
- 50: a phone number comparison part for automatic dialing
- 190: a wireless control part
- 191: a receiving part
- 192: a sending part
- 193: an antenna
- 217: a second key operation part
- 219: a telephone directory memory part
- 221: an open/close detector
- 222: a magnet
- 223: a speaker
- 224: a microphone

## Claims

1. A fold type portable telephone device comprising:
(a) a memory part for memorizing an incoming call history;
(b) an incoming call history read-out part;
(c) a display part;
(d) an open/close detector for detecting an open and closed state of a casing; and
(e) an automatic calling part for automatically dialing when the open/close detector detects that a casing is open,
wherein the foldable portable telephone device is configured to automatically dial a phone number in the incoming call history displayed on the display part, when the open/close detector detects that the casing is open at a state that the incoming call history is read out from the memory part and displayed on the display part.

2. The fold type portable telephone device according to claim 1 further comprising:
(a) a telephone directory memory part for memorizing the telephone directory data; and
(b) a phone number comparison part for comparing an incoming phone number with the telephone directory data that is memorized in the telephone directory memory part,
wherein the fold type portable telephone device is configured to automatically dial a phone number in the incoming call history displayed on the display part, when the open/close detector detects that the casing is open at a state that the phone number in the incoming call history that is read out from the memory part and displayed on the display part is confirmed identical to the telephone directory data that is memorized in the telephone directory memory part.

3. The fold type portable telephone device according to claim 2, wherein a phone number comparison part for automatic dialing for recording a phone number to be automatically dialed when a casing is open as a phone number for automatic calling, and at the same time, comparing a phone number that is read out from the memory part or the telephone directory memory part and displayed on the display part with the phone number for automatic dialing is provided, and
the fold type portable telephone device is configured to automatically dial a phone number displayed on the display part, when the open/close detector detects that the casing is open at a state that the phone number displayed on the display part is confirmed as a phone number for automatic dialing.

4. A fold type portable telephone device comprising:
(a) a telephone directory memory part for memorizing the telephone directory data;
(b) a telephone directory data read-out part;
(c) a display part;
(d) an open/close detector of a casing; and
(e) an automatic calling part for automatically dialing when the open/close detector detects that a casing is open,
wherein the fold type portable telephone device is configured to automatically dial a phone number in the telephone directory data displayed on the display part, when the open/close detector detects that a casing is open at a state that the telephone directory data is read out from the telephone directory memory part and displayed on the display part.

5. The fold type portable telephone device according to claim 4, wherein a phone number comparison part for automatic dialing for recording a phone number to be automatically dialed when a casing is open as a phone number for automatic calling, and at the same time, comparing a phone number that is read out from the memory part or the telephone directory memory part and displayed on the display part with the phone number for automatic dialing is provided, and
the fold type portable telephone device is configured to automatically dial a phone number displayed on the display part, when the open/close detector detects that the casing is open at a state that the phone number displayed on the display part is confirmed as a phone number for automatic dialing.
